# FASCICULE DE BREVET EUROPEEN

(11) **EP 3 971 007 B1**
(45) Date de publication et mention de la délivrance du brevet: **10.05.2023**
(21) Numéro de dépôt: 21195733.7
(22) Date de dépôt: 09.09.2021
(51) Int. Cl.: B60K 37/06

(54) **PROCÉDÉ DE COMMANDE D'UNE FONCTION D'UN VÉHICULE AUTOMOBILE, UTILISATION D'UNE DIRECTION ASSISTÉE ET DISPOSITIF**
VERFAHREN ZUR STEUERUNG EINER FUNKTION EINES KRAFTFAHRZEUGS, VERWENDUNG EINER SERVOLENKUNG UND VORRICHTUNG
METHOD FOR CONTROLLING A FUNCTION OF A MOTOR VEHICLE, USE OF A POWER STEERING SYSTEM, AND DEVICE

(30) Priorité: 17.09.2020 FR 2009423
(43) Date de publication de la demande: 23.03.2022
(73) Titulaire: Renault s.a.s, 92100 Boulogne Billancourt (FR)
(72) Inventeur: LECLERE, Thomas, 76000 ROUEN (FR)
(74) Mandataire: Renault Group

(56) Documents cités:
- DE-A1-102018 222 235
- FR-A1- 3 043 977
- US-A1- 2016 185 356

## Description

La présente invention se rapporte au domaine de la commande d'une fonction d'un véhicule, par le biais d'un volant de conduite de direction d'un véhicule automobile.

Le véhicule est équipé d'une direction assistée. La direction assistée électrique utilisée au sein d'un véhicule automobile permet de faciliter la conduite de ce dernier par un utilisateur, notamment en facilitant la rotation d'un volant de conduite au moyen d'une assistance électrique. Afin de déterminer dans quels cas l'assistance électrique doit fonctionner pour faciliter la rotation du volant de conduite, l'assistance électrique comprend au moins un capteur de couple apte à détecter une force exercée sur ledit volant de conduite. Quand ce couple est détecté dans le sens horaire ou anti-horaire, le moteur électrique de l'assistance électrique met en rotation la colonne de direction dans le sens souhaité par l'utilisateur, assistant ainsi l'effort généré par ce dernier. Les véhicules automobiles comprennent d'autres fonctions, permettant notamment de faciliter leur conduite. Par exemple, des dispositifs d'aide au stationnement, permettent de guider l'utilisateur lorsque celui-ci souhaite stationner le véhicule automobile, un système d'air conditionné ou encore un dispositif multimédia. L'ensemble de ces fonctions nécessite d'être commandé par l'utilisateur du véhicule automobile. Les commandes associées à ces fonctions peuvent alors être disposées dans un cockpit du véhicule automobile et peuvent être matérialisées par des interrupteurs disposés dans une console centrale dudit cockpit. Un problème d'une telle disposition des commandes des fonctions réside notamment en ce qu'elle manque d'accessibilité pour l'utilisateur de par leur disposition ou encore de par leur nombre trop important sur la console centrale du cockpit.

US2016185356A1 divulgue un volant de direction dans un véhicule comprenant une pluralité de capteurs qui mesurent des forces appliquées au volant de direction.

Le but de la présente invention est donc de palier les différents inconvénients évoqués ci-dessus en proposant un nouveau procédé permettant d'activer ou désactiver les différentes fonctions du véhicule automobile. L'invention doit également présenter l'avantage d'être simple à mettre en place au sein du véhicule automobile, sans nécessiter d'investissements techniques supplémentaires.

L'invention porte donc sur un procédé de commande d'au moins une fonction équipant un véhicule automobile, le véhicule automobile comprenant une direction assistée électrique et un volant de conduite, la direction assistée électrique comprenant au moins un capteur de couple qui mesure un effort rotatif exercé sur le volant de conduite, le procédé comprenant au moins une première étape au cours de laquelle le capteur de couple détecte au moins une séquence vibratoire effective comprenant au moins deux chocs similaires contre le volant de conduite, une deuxième étape au cours de laquelle on analyse la séquence vibratoire effective détectée par le capteur de couple et une troisième étape de vérification de la séquence vibratoire effective pour commander la fonction.

La direction assistée électrique permet d'assister un utilisateur du véhicule automobile lorsque ce dernier met en rotation le volant de conduite du véhicule automobile. Le capteur de couple qui interagit avec une colonne de direction détecte un couple rotatif exercé sur le volant de conduite, ce couple étant transmis à une unité de contrôle qui pilote le moteur électrique de la direction assistée électrique.

Selon l'invention, la séquence vibratoire effective exercée contre le volant de conduite est strictement distincte de l'effort rotatif exercé sur le volant de conduite pour le manoeuvrer en sens horaire ou anti-horaire. Ainsi, le capteur de couple est apte à détecter à la fois la valeur de couple de rotation nécessaire à l'utilisation de la direction assistée, et également à détecter la séquence vibratoire effective générée comprenant au moins deux chocs contre le volant de conduite, dans le but d'activer ou de désactiver une fonction quelconque du véhicule.

Selon une caractéristique de l'invention, les au moins deux chocs contre le volant de conduite sont opérés dans un intervalle de temps effectif déterminé.

Les chocs générés contre le volant de conduite peuvent par exemple être provoqués par l'utilisateur du véhicule automobile. De manière plus précise, lors de la conduite du véhicule automobile par l'utilisateur, ce dernier peut par une gestuelle manuelle appliquer une séquence d'au moins deux chocs contre le volant de conduite dudit véhicule automobile, notamment contre le cerclage dudit volant. Cette gestuelle manuelle de la part du conducteur du véhicule automobile génère alors la séquence vibratoire effective.

Selon une caractéristique de l'invention, au cours de la deuxième étape, on compare la séquence vibratoire effective détectée par le capteur de couple avec une séquence de référence.

La séquence de référence peut alors être une séquence préimplantée dans l'unité de contrôle de la direction assistée électrique, ou dans tout autre unité électronique de commande susceptible de communiquer avec le capteur de couple rotatif. Cette comparaison entre la séquence détectée, ici séquence vibratoire effective, et la séquence de référence permet ainsi de déterminer si ladite fonction peut être commandée par l'unité de contrôle lors de la deuxième étape d'analyse.

Selon une caractéristique de l'invention, la deuxième étape d'analyse comprend une analyse de chaque choc de la séquence vibratoire dont l'amplitude doit être comprise entre deux valeurs de seuils d'amplitude. Ledit choc est caractérisé par son amplitude et sa période vibratoire. La phase d'analyse permet de détecter un choc représentatif et utilisable pour l'étape suivante. Un choc peut être représenté par une onde sinusoïdale oscillant sur une période temporelle entre une amplitude maximale positive et minimale négative. Il convient d'analyser ladite onde sinusoïdale de par son amplitude et de par sa période. De manière préférentielle, on prendra la valeur absolue de l'amplitude.

Afin de déterminer la présence ou non d'un choc volontaire, on utilise la valeur absolue du couple. Selon une première méthode d'analyse, on détermine une période temporelle autour du choc à analyser et on détermine si la valeur absolue du couple dudit choc est largement supérieure à chacune des valeurs de couple considérées sur cette période temporelle. Ainsi, dans une configuration où la valeur absolue du couple du choc est largement supérieure aux valeurs de couple prises dans la période temporelle définit précédemment, on considère que l'on détecte un choc contre le volant de conduite provoqué volontairement par l'utilisateur.

De manière complémentaire, on peut définir une valeur de couple maximale, considérée comme une valeur acceptable de prise en compte du choc. Autrement dit, si la valeur absolue du couple du choc est inférieure à la valeur de couple maximale, on considère que l'on détecte un choc représentatif et utilisable pour activer une commande du véhicule automobile.

De manière alternative, on calcul une moyenne des valeurs de couple sur la période temporelle autour du choc. Ainsi, si la valeur absolue de la différence entre la valeur absolue du couple du choc et la moyenne des valeurs de couple est supérieure à un seuil, on considère que le choc est à considérer comme un choc contre le volant de conduite provoqué volontairement par l'utilisateur. Également, on peut utiliser la valeur de couple maximale telle que décrit précédemment, afin de déterminer si l'on considère le choc comme utilisable dans le procédé de commande.

Selon une caractéristique de l'invention, on compare un intervalle de temps effectif mesuré de la séquence vibratoire effective détectée par le capteur de couple avec un intervalle de temps de référence de la séquence de référence et on met en oeuvre la troisième étape au moins lorsque l'intervalle de temps effectif est sensiblement égal à l'intervalle de temps de référence. Dit autrement, la phase d'analyse du choc peut comporter une phase d'analyse de la période temporelle dudit choc. De manière préférentielle, on compare la période de l'onde sinusoïdale effective mesurée de la séquence vibratoire effective détectée par le capteur de couple avec un intervalle de temps de référence de la séquence de référence. Lorsque la période de temps effective mesurée est inférieure ou égale à l'intervalle de temps de référence, le choc peut être pris en compte.

La phase d'analyse du choc de l'invention comprend deux phases d'analyse de l'amplitude du couple mesurée qui sont consécutives et chacune des phases comprend des conditions qui sont requises avant de passer à l'étape suivante.

Lors de la première phase d'analyse d'amplitude, on compare une amplitude effective de la séquence vibratoire effective détectée par le capteur de couple par rapport à un seuil d'amplitude minimal de référence pour déterminer la présence d'un choc apte à être pris en compte. L'amplitude effective peut être une différence d'amplitudes de divers chocs pendant une séquence temporelle d'acquisition des mesures.

La deuxième phase d'analyse du choc consécutive à la première phase, comprend une comparaison de l'amplitude du choc pris en compte avec un seuil maximal d'amplitude. Ledit seuil maximal est considéré comme la limite acceptable. En effet, l'invention ne prend pas en compte des chocs trop importants qui ne sont pas représentatifs d'une volonté d'activer la fonction.

On entend par amplitude la valeur maximale de la vibration composant la séquence vibratoire et permettant notamment de traduire l'intensité d'un choc contre le volant de conduite. Ceci permet ainsi de distinguer les chocs provoqués volontairement par l'utilisateur du véhicule automobile des chocs non intentionnels, notamment ceux résultant des imperfections de la route.

Le procédé selon l'invention comprend une troisième étape de vérification de la commande.

Ladite étape de vérification comprend une phase de confirmation de commande de la part du conducteur. La phase de confirmation comprend la détection d'un deuxième choc similaire ou semblable en amplitude et en période au premier choc détecté. De plus l'intervalle de temps entre le premier choc et le deuxième choc est inférieur à un seuil temporel de référence, ladite phase de vérification valide la séquence de commande et on peut commander la fonction.

Ladite phase de confirmation du procédé permet de discriminer une commande intentionnelle de l'utilisateur de tout autre évènement susceptible de générer un choc sur le volant de conduite. Ladite étape de vérification comprend une mesure de la vitesse du véhicule et une validation de ladite vitesse mesurée par rapport à un seuil de vitesse.

Selon une caractéristique de l'invention, au moins la troisième étape comprend une phase de validation de la vitesse du véhicule automobile, le véhicule automobile se déplaçant à une vitesse effective inférieure ou égale à une vitesse seuil dudit véhicule automobile, la troisième étape n'étant pas validée lorsque le véhicule automobile se déplace à la vitesse effective supérieure à la vitesse seuil dudit véhicule automobile. Le procédé comprend donc une limitation liée à la vitesse du véhicule automobile lors sa mise en oeuvre. De manière avantageuse, on s'assure que la gestuelle manuelle de l'utilisateur contre le volant de conduite est effectuée uniquement lorsque le véhicule automobile se déplace à la vitesse effective inférieure à la vitesse seuil assurant alors la sécurité dudit utilisateur.

On comprend de ces caractéristiques de l'étape de vérification qu'elles permettent d'assurer la sécurité de l'utilisateur du véhicule automobile, notamment en empêchant la commande de la fonction en dehors d'un état du véhicule automobile sensiblement proche d'un état statique.

De manière complémentaire ou alternative et selon une caractéristique de l'invention, au moins la troisième étape est effectuée lorsque le capteur de couple détecte une valeur effective de couple rotatif sur le volant de conduite inférieure à une valeur seuil de couple rotatif, la troisième étape n'étant pas validée lorsque la valeur effective de couple rotatif sur le volant de conduite est supérieure à la valeur seuil de couple rotatif. On comprend alors que l'on s'assure que le procédé est mis en oeuvre lorsque le capteur de couple est disponible pour détecter la séquence vibratoire générée par l'utilisateur du véhicule automobile, c'est-à-dire lorsque ce capteur n'est pas utilisé pour sa fonction première de détection des efforts rotatifs sur le volant de conduite.

Il faut noter que la vérification de la vitesse du véhicule inférieure à un seuil de vitesse peut être effectuée en amont du procédé c'est-à-dire lors de la détection d'un choc sur le volant.

Selon un aspect de l'invention, le procédé comprend au moins une étape préliminaire d'enregistrement de l'affectation de la séquence de référence à la fonction du véhicule automobile.

L'étape préliminaire d'enregistrement de l'affectation de la séquence de référence permet à l'utilisateur du véhicule automobile de personnaliser l'accès à la fonction du véhicule automobile, notamment en déterminant l'activation de la fonction désirée suivant la séquence de référence. Cette étape permet donc à l'utilisateur du véhicule automobile de choisir la fonction qui sera commandée par la séquence vibratoire effective.

De manière complémentaire, on peut déterminer une occurrence de référence de la séquence vibratoire, c'est-à-dire le nombre de répétition des chocs effectués dans l'intervalle de temps de référence, afin d'associer plusieurs fonctions à plusieurs séquences de référence. En d'autres termes, l'utilisateur peut décider d'attribuer une première occurrence de référence de deux chocs contre le volant de conduite à la fonction de l'aide au stationnement, tandis qu'une deuxième occurrence de référence distincte de la première occurrence de référence peut être attribuée à la mise en oeuvre de la fonction `mute' sur l'autoradio, par exemple.

L'invention porte aussi sur une utilisation d'une direction assistée électrique d'un véhicule automobile comprenant au moins un capteur de couple associé à un volant de conduite pour commander une fonction du véhicule automobile autre que sa direction, au cours de laquelle on génère deux chocs contre le volant de conduite, puis le capteur de couple détecte au moins une séquence vibratoire effective générée par les chocs contre le volant de conduite, on analyse la séquence vibratoire effective détectée par le capteur de couple et on commande la fonction concernée du véhicule automobile suivant l'analyse de la séquence vibratoire effective opérée préalablement.

L'invention porte également sur un véhicule automobile comprenant au moins un volant de conduite, une colonne de direction et une direction assistée électrique qui comprend au moins un capteur de couple de la colonne de direction, une unité de contrôle reliée au capteur de couple et au moins un moteur électrique de rotation de la colonne de direction, l'unité de contrôle étant apte à générer une commande d'une fonction du véhicule automobile autre que sa direction au moyen du procédé de commande selon les caractéristiques précédentes.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig.1] est une vue générale en face avant d'un véhicule automobile comprenant une direction assistée électrique selon l'invention ;
[Fig.2] est une vue schématique de la direction assistée électrique de la figure 1, comprenant au moins un capteur de couple logé dans un volant de conduite du véhicule automobile et une unité de contrôle ;
[Fig.3] est un ensemble de graphes illustrant un procédé de commande d'une fonction du véhicule automobile de la figure 1.

Sur les figures, les éléments communs conservent la même référence.

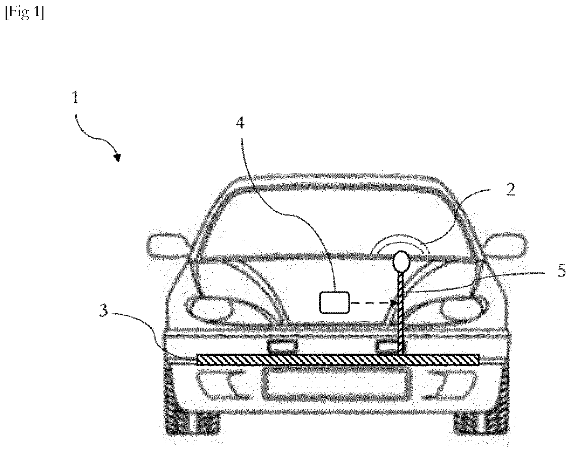

La figure 1 illustre un véhicule automobile 1, en observant sa face avant, qui comprend au moins un volant de conduite 2, un boitier de direction 3, une direction assistée électrique 4 et une colonne de direction 5. Le boitier de direction 3 correspond à une crémaillère reliée à deux roues du véhicule automobile 1 et à la colonne de direction 5. La colonne de direction 5 est alors reliée d'une part au boitier de direction 3 et d'autre part au volant de conduite 2 et correspond à un arbre transmettant la rotation de ce dernier. La direction assistée électrique 4 a pour fonction de faciliter la rotation du volant de conduite 2 pour un utilisateur du véhicule automobile 1, lors du déplacement de ce dernier et notamment en agissant sur la rotation de l'arbre formant la colonne de direction 5.

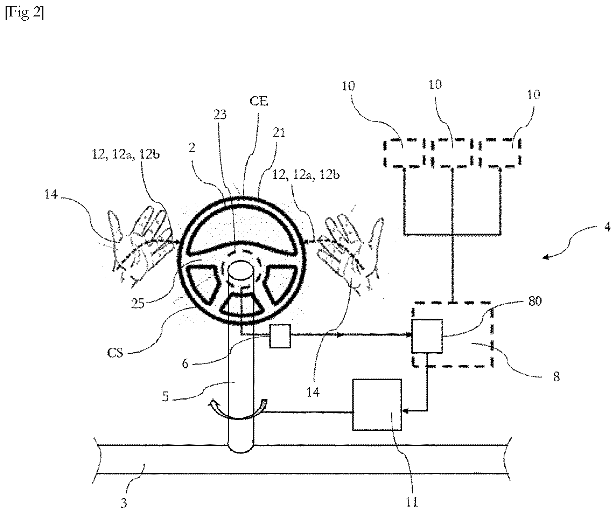

La direction assistée électrique 4, plus particulièrement visible à la figure 2, comprend au moins un capteur de couple 6 et une unité de contrôle 8, le capteur de couple 6 étant relié à l'unité de contrôle 8 de manière à pouvoir délivrer un signal mesuré par le capteur de couple 6 à l'unité de contrôle 8.

D'une manière générale, l'unité de contrôle 8 de la direction assistée électrique 4 est apte à contrôler le fonctionnement de ladite direction assistée électrique 4. Selon l'invention, ladite unité est apte à générer une instruction de commande d'au moins une fonction 10 équipant le véhicule automobile 1 au moyen d'un procédé de commande. A cette fin, l'unité de contrôle 8 comprend au moins un moyen de discrimination 80 lui permettant de distinguer lorsqu'elle doit contrôler le fonctionnement de la direction assistée électrique 4 et lorsqu'elle doit générer l'instruction de commande de la fonction 10 équipant le véhicule automobile en fonction de données reçues par le capteur de couple 6.

Le capteur de couple 6 est lui positionné contre la colonne de direction 5 du véhicule automobile 1 et est apte à mesurer un effort rotatif horaire ou anti-horaire exercé sur ladite colonne de direction 5 reliée au volant de conduite 2. Dit autrement, le capteur de couple 6 est apte à détecter au moins une valeur de couple sur le volant de conduite 2, générée par l'utilisateur du véhicule automobile 1 lors de la conduite de ce dernier. Le capteur de couple 6 transmet alors cette valeur de couple à l'unité de contrôle 8 afin que celle-ci active l'assistance électrique à la conduite au moyen d'un moteur électrique 11 de la direction assistée électrique 4 selon un procédé d'amplification de la commande bien connu de l'état de l'art. On comprend alors que le moteur électrique 11 est apte à entraîner en rotation la colonne de direction 5 reliée au volant de conduite 2 afin de faciliter la rotation de ce dernier.

Ledit véhicule automobile 1 peut comprendre une pluralité de fonctions 10 permettant de faciliter son utilisation par l'utilisateur, telle que la mise en fonctionnement d'une installation audio ou encore d'une assistance au stationnement dudit véhicule automobile 1. Ces fonctions ne sont données qu'à titre d'exemple d'application et on comprend que l'invention couvre l'activation, la commande ou la désactivation de toute fonction embarquée sur le véhicule. Afin de mettre en oeuvre au moins une de ces fonctions 10 associées au véhicule automobile 1, l'unité de contrôle 8 de la direction assistée électrique 4 est apte à mettre en oeuvre le procédé de commande de la fonction 10 équipant le véhicule automobile 1, dont les étapes vont maintenant être décrites plus en détail au moyen de la figure 2.

Selon l'invention, le procédé de commande comprend une première étape au cours de laquelle le capteur de couple 6 détecte au moins une séquence vibratoire générée par au moins deux chocs 12 contre le volant de conduite 2. Un choc significatif est mesuré et représenté par une onde sinusoïdale oscillant sur au-moins une période entre une amplitude maximale dite positive et une amplitude minimale dite négative. Il convient de valider et confirmer une séquence constituée de chocs, apte à enclencher la commande de la fonction. La validation et confirmation est effectuée par rapport à une onde de référence présentant une amplitude de référence en valeur absolue et une période de référence.

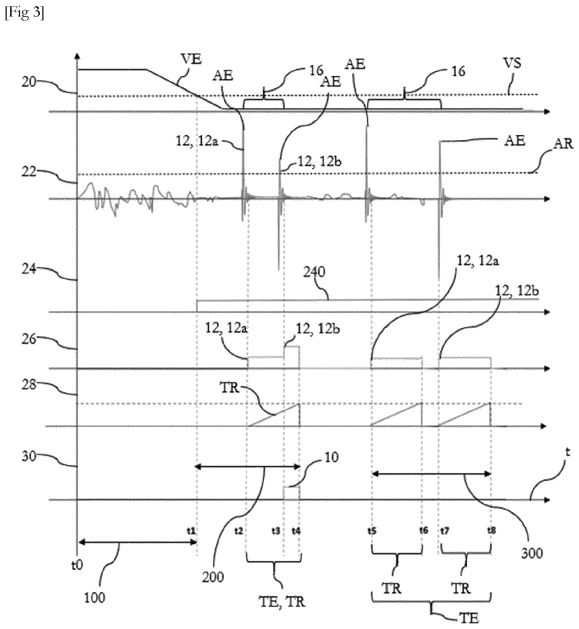

De manière plus précise, la séquence vibratoire est générée ici par au moins deux chocs 12, appelés premier choc 12a et deuxième choc 12b, opérés par l'utilisateur du véhicule automobile contre le volant de conduite 2. On comprend alors que chacun du premier choc 12a et du deuxième choc 12b génère une vibration, formant la séquence vibratoire. Le choc 12 sur le volant de conduite 2 peut alors être par exemple et de manière non limitative une claque d'une main 14 de l'utilisateur contre le volant de conduite 2, de telle sorte que cette claque 14 génère la séquence vibratoire, ici appelée séquence vibratoire effective 16 et visible à la figure 3. Ce ou ces chocs 12, 12a, 12b provoquent une vibration qui naît sur un cerclage 21 du volant de conduite 2, une telle vibration étant transmise à un moyeu 23 du volant de conduite 2 par au moins une branche 25 dudit volant de conduite 2 interposée entre ce cerclage 21 et le moyeu 23. Ce moyeu 23 étant solidaire de la colonne de direction 5, la vibration transite le long de cette colonne et se trouve détectée par le capteur de couple 6 de la direction assistée électrique 4.

Une fois la séquence vibratoire effective détectée par le capteur de couple 6, ce dernier est apte à transmettre plusieurs données de cette séquence vibratoire effective à l'unité de contrôle 8 afin que cette dernière les analyse.

La première étape comprend une phase de validation d'un choc représentatif.

Ladite première étape comprend donc la détection et la mesure par le capteur de couple de la direction assistée d'un couple exercé par le conducteur sur le volant de direction. Le couple détecté peut être un choc sous forme d'une onde et présente une amplitude et une période. Ainsi le capteur de couple 6 envoie les données récoltées à savoir les chocs 12 contre le volant de conduite 2, l'amplitude effective de ces chocs et l'intervalle de temps effectif dans lequel sont effectués lesdits chocs 12, à l'unité de contrôle 8 afin que cette dernière analyse ces données lors d'une deuxième étape du procédé.

Selon l'invention, ladite deuxième étape comprend une phase d'analyse de l'amplitude du choc. De manière générale, on prend la valeur absolue de l'amplitude pour faciliter les calculs et s'abstreindre des valeurs positives ou négatives d'amplitude. On définit alors une amplitude effective AE, visible à la figure 3, de la séquence vibratoire effective 16 correspondant à la valeur maximale d'au moins une vibration qui compose la séquence vibratoire effective 16. Cette amplitude effective AE participe notamment à distinguer la séquence vibratoire effective générée volontairement par le conducteur du véhicule automobile d'une vibration provoquée par un choc non désiré sur le volant de conduite 2 ou par un choc non contrôlé sur les roues avant dudit véhicule, cette vibration présentant alors une amplitude inférieure qui n'est pas identifiée par l'unité de contrôle 8 comme partie d'une commande de la fonction 10 du véhicule automobile.

Cette valeur d'amplitude effective AE peut être considérée comme un écart d'amplitude entre un choc mesuré à un instant donné t et différents autres chocs détectés aux instants voisins c'est-à-dire dans un intervalle de temps entourant l'instant t. Ledit intervalle de temps peut présenter une longueur de l'ordre de quelques dixièmes de secondes voire d'une seconde.

De plus, la valeur de couple détectée doit être comprise dans une fourchette délimitée par deux valeurs de seuils. Ainsi selon un mode de réalisation, la valeur absolue du couple détecté à un instant t est comparée à chacune des valeurs de couples considérés sur une petite fenêtre temporelle ou intervalle de temps centré sur l'instant t c'est-à-dire dans un ensemble de quelques points mesurés avant l'instant t, et quelques points après l'instant t. Si la valeur de couple à l'instant t est supérieure aux autres valeurs de l'intervalle de temps centré d'au-moins la valeur d'amplitude effective, alors on considère qu'on détecte un choc apte à être pris en compte.

La valeur absolue du couple détecté doit être à une valeur maximale ou seuil maximal considérée comme la limite acceptable du choc. En effet, l'invention ne prend pas en compte des chocs trop importants qui ne sont pas représentatifs d'une volonté d'activer la fonction.

Si la valeur du couple détecté est comprise entre les deux seuils, alors on considère qu'on détecte un choc représentatif et utilisable.

Selon un autre mode de réalisation, la valeur absolue du couple détecté à un instant t est comparée à la moyenne des valeurs de couples détectés sur une petite fenêtre temporelle autour de t est supérieure à un seuil qui peut être l'amplitude effective, alors on considère qu'on détecte un choc apte à être pris en compte.

Si la valeur absolue du couple est inférieure à une valeur maximale ou seuil maximal considérée comme la limite acceptable, alors on considère qu'on détecte un choc représentatif et utilisable.

Ladite deuxième étape peut comprendre également une phase d'analyse de la période de l'onde du choc détecté. La deuxième étape du procédé consiste alors en une comparaison de la séquence vibratoire effective détectée par le capteur de couple 6 à une séquence de référence, implantée dans l'unité de contrôle 8, par exemple. La séquence de référence correspond à une séquence préalablement enregistrée dans l'unité de contrôle 8. De manière préférentielle, on compare la période de temps effectif de l'onde sinusoïdale effective mesurée de la séquence vibratoire effective détectée par le capteur de couple avec un intervalle de temps de référence de la séquence de référence. Lorsque la période de temps effectif mesurée est inférieure ou égale à l'intervalle de temps de référence, le choc peut être pris en compte.

Le procédé selon l'invention comprend une troisième étape de vérification et de validation de la séquence vibratoire pour l'activation de la commande.

On définit une occurrence effective de la séquence vibratoire effective, correspondant à un nombre de répétition de chocs 12 contre le volant de conduite 2 et donc de nombre de répétition de vibrations formant la séquence vibratoire effective. Dans l'exemple de l'invention, l'occurrence de la séquence vibratoire effective est de deux.

Ladite troisième étape de vérification comprend une phase de confirmation de commande de la part du conducteur. La phase de confirmation comprend la détection d'un deuxième choc similaire et semblable en amplitude et en période au premier choc détecté. De plus l'intervalle de temps entre le premier et le deuxième choc est inférieur à un seuil temporel de référence, ladite phase de vérification valide la séquence de commande.

Ladite phase de confirmation du procédé permet de discriminer une commande intentionnelle de l'utilisateur de tout autre évènement susceptible de générer un choc sur le volant de conduite.

De manière préférentielle, le nombre de répétition de chocs est de deux pour avoir une similarité des chocs en amplitude et en période sur un intervalle de temps assez court.

On définit un intervalle de temps effectif TE, visible à la figure 3, de la séquence vibratoire effective 16, correspondant à une période temporelle dans laquelle s'inscrit la séquence vibratoire effective. Dit autrement, l'intervalle de temps effectif TE correspond à la période de temps durant laquelle est effectué l'au moins deux chocs 12 contre le volant de conduite 2 du véhicule automobile. Ainsi, dans l'exemple de l'invention, le temps effectif TE est égal au temps de la séquence vibratoire effective 16 mesuré entre la détection du premier choc 12a et la fin de la détection du deuxième choc 12b par le capteur de couple 6. Le temps effectif TE de la séquence vibratoire effective est alors comparé à une période temporelle durant laquelle est effectuée la séquence vibratoire de référence, cette comparaison sera exposée plus loin dans la suite de la description détaillée.

La troisième étape de vérification comprend également une phase de validation de la vitesse du véhicule. De manière préférentielle, le procédé selon l'invention n'est pas démarré lorsque le véhicule est mobile avec une vitesse significative. On évite ainsi des commandes aléatoires qui peuvent participer à dérouter l'attention du conducteur quand le véhicule roule avec une vitesse significative. Pour cela, la troisième étape de validation comprend une mesure de la vitesse du véhicule et une comparaison de ladite vitesse mesurée par rapport à un seuil maximal de vitesse.

Il convient de considérer que le procédé de commande de la fonction 10 équipant le véhicule automobile ne peut être mis en oeuvre que dans des conditions particulières du véhicule automobile. En effet, afin d'assurer la sécurité de l'utilisateur du véhicule automobile, l'unité de contrôle 8 est autorisée à mettre en oeuvre le procédé de commande uniquement lorsque des paramètres de vitesse du véhicule automobile et de couple du volant de conduite 2 sont respectés.

Selon un mode de réalisation, il convient de considérer que le véhicule automobile est immobile, ou présente une vitesse raisonnable, afin d'assurer la sécurité de l'utilisateur du véhicule automobile. L'utilisateur peut alors réaliser une succession d'au moins deux chocs 12 contre le volant de conduite 2 du véhicule automobile pour activer une fonction du véhicule.

Ainsi, on définit une vitesse seuil VS du véhicule automobile correspondant à une vitesse maximale autorisée du véhicule automobile pour la mise en oeuvre du procédé de commande. Ainsi, on compare une vitesse effective VE du véhicule automobile à la vitesse seuil VS définit préalablement, le procédé de commande étant mis en oeuvre seulement lorsque la vitesse effective VE du véhicule automobile est inférieure à la vitesse seuil VS, cette comparaison permettant de distinguer une utilisation active sur route du véhicule automobile par l'utilisateur, d'une utilisation sensiblement à l'arrêt dudit véhicule automobile, le procédé objet de l'invention étant préférentiellement utilisé dans une condition d'immobilité du véhicule.

De manière alternative ou complémentaire, on détermine une valeur seuil de couple rotatif CS sur le volant de conduite 2 du véhicule automobile. La valeur seuil de couple rotatif CS sur le volant de conduite 2 correspond alors à une valeur de couple maximale en dessous de laquelle est autorisée la mise en oeuvre du procédé de commande selon l'invention. On compare alors une valeur effective de couple rotatif CE détectée par le capteur de couple 6 à la valeur seuil de couple rotatif CS préalablement déterminée, le procédé de commande étant mis en oeuvre seulement lorsque au moins la valeur effective de couple rotatif CE mesurée par le capteur de couple 6 est inférieure à la valeur seuil de couple rotatif CS prédéfinit. Cette comparaison de la valeur effective de couple rotatif CE à la valeur seuil de couple rotatif CS permet en effet de distinguer une utilisation ou non du volant de conduite 2 par le conducteur du véhicule automobile pour manoeuvrer les roues du véhicule. On comprend de ce qui précède que le procédé de commande est autorisé quand le volant de conduite 2 est peu ou pas manipulé en rotation par le conducteur.

Ainsi, une fois que la valeur effective de couple rotatif CE détectée par le capteur de couple 6 est inférieure à la valeur seuil de couple rotatif CS et/ou que la vitesse effective VE du véhicule est inférieure à la vitesse seuil VS, l'unité de contrôle 8 est autorisée à mettre en oeuvre le procédé de commande de la fonction 10 du véhicule automobile.

Selon un autre mode de réalisation, on vérifie que l'angle au volant est sensiblement nul c'est-à-dire entre deux valeurs extrêmes de 5° à droite ou à gauche par exemple, le véhicule étant alors considéré en ligne droite et l'utilisateur peut alors réaliser une succession d'au moins deux chocs 12 contre le volant de conduite 2 du véhicule automobile pour activer une fonction du véhicule.

Ainsi, lors des différentes phases et étapes du procédé, l'unité de contrôle 8 compare les données de la séquence vibratoire effective récoltées par le capteur de couple 6 avec les données de la séquence de référence implantée dans ladite unité de contrôle 8. Lorsqu'au moins une des données de la séquence vibratoire effective, à savoir son occurrence effective, son amplitude effective ou son intervalle de temps effectif, ne correspond pas aux données de la séquence de référence, à savoir son occurrence de référence, son amplitude de référence ou son intervalle de temps de référence, l'unité de contrôle ne commande pas la fonction du véhicule automobile lors d'une troisième étape du procédé. De façon claire, chaque phase du procédé doit être validée pour passer à la phase consécutive suivante. En cas de non validation d'une phase, le procédé est arrêté et revient à la première étape initiale.

A l'inverse, lorsque l'amplitude effective est au moins égale à l'amplitude de référence de la séquence de référence, que l'intervalle de temps effectif est sensiblement égal à l'intervalle de temps de référence à plus ou moins 5% et que l'occurrence effective est au moins égale à l'occurrence de référence, l'unité de contrôle 8 commande la fonction 10 du véhicule automobile lors de la troisième étape du procédé.

Un exemple de réalisation du procédé de commande va maintenant être décrit, en rapport avec la figure 2 et la figure 3. Il convient de considérer que cet exemple n'est pas limitatif et que d'autres exemples pourraient être mis en oeuvre sans sortir du cadre de l'invention. Dans la suite de la description détaillée, on considérera que l'occurrence de la séquence de référence est de deux, par exemple.

Sur l'ensemble des graphes de la figure 3, l'abscisse correspond à un temps. Un premier graphe 20 correspond à la vitesse du véhicule automobile, un deuxième graphe 22 à l'amplitude effective AE détectée par le capteur de couple 6 et un troisième graphe 24 correspond à une autorisation 240 de mise en oeuvre ou non du procédé de commande par l'unité de contrôle 8. Un quatrième graphe 26 correspond à l'occurrence effective des chocs contre le volant de conduite 2 tandis qu'un cinquième graphe 28 correspond à un intervalle de temps de référence TR de la séquence de référence, un sixième graphe 30 correspondant à la commande de la fonction 10 du véhicule automobile visée à la troisième étape du procédé objet de l'invention.

On définit une première portion 100 des graphes correspondant à une portion entre un temps nul t0 et un premier temps t1. La première portion 100 des graphes correspond alors à l'utilisation du véhicule automobile dans une condition de conduite, par exemple circulant à une vitesse effective VE supérieure à la vitesse seuil VS et dans lequel le volant de conduite 2 est manipulé par le conducteur. Dans ces conditions, on remarque que le capteur de couple 6 détecte les valeurs de couple du volant de conduite 2 afin que l'unité de commande 8 pilote le moteur électrique 11 de la direction assistée électrique 4. Dans cette première portion 100 des graphes, on comprend que la vitesse effective VE du véhicule automobile est supérieure à la vitesse seuil VS correspondant par exemple à 5km/h et que la valeur effective de couple rotatif CE sur le volant de conduite 2 est supérieure à la valeur seuil de couple rotatif CS, la mise en oeuvre du procédé de commande selon l'invention n'étant alors pas autorisée.

On définit une deuxième portion 200 des graphes, correspondant à une portion entre le premier temps t1 et un quatrième temps t4. Le premier temps t1 correspond alors à un temps à partir duquel la vitesse effective VE du véhicule automobile passe en dessous de la vitesse seuil VS et où la valeur effective de couple rotatif CE est inférieure à la valeur seuil de couple rotatif CS. Dans une telle configuration du véhicule automobile, l'unité de contrôle 8 autorise la mise en oeuvre du procédé de commande, cette activation 240 étant effective à partir du premier temps t1 et visible sur le troisième graphe 24.

On définit un deuxième temps t2 correspondant au premier choc 12a contre le volant de conduite 2 détecté par le capteur de couple 6 et visible sur le quatrième graphe 26. De manière plus précise, le capteur de couple 6 détecte au moins l'amplitude effective AE de la vibration générée par le premier choc 12a sur le volant de conduite 2 et l'unité de commande 8 compare cette amplitude effective AE détectée avec une amplitude de référence AR de la séquence de référence, pour décider si cette vibration est un choc souhaité par l'utilisateur. Un troisième temps t3 correspond au deuxième choc 12b contre le volant de conduite 2 détecté par le capteur de couple 6, ce dernier détectant l'amplitude effective AE de la vibration générée par le deuxième choc 12b sur le volant de conduite 2 et l'unité de commande 8 compare cette amplitude effective AE détectée avec l'amplitude de référence AR, afin de décider si cette vibration est un choc souhaité par l'utilisateur. On comprend alors que le premier choc 12a et le deuxième choc 12b forment la séquence vibratoire effective 16 détectée par le capteur de couple 6, cette séquence vibratoire effective 16 étant effectuée entre le deuxième temps t2 et le troisième temps t3.

On comprend de ce qui précède, que l'intervalle de temps effectif TE de la séquence vibratoire effective 16 détectée par le capteur de couple 6 correspond au temps qui s'écoule entre le deuxième temps t2 et un quatrième temps t4, ce dernier marquant la fin de la vibration provoquée par le deuxième choc 12b. On remarque également sur le cinquième graphe 28 correspondant à l'intervalle de temps de référence TR, que l'initiation d'un minuteur permettant de déterminer l'intervalle de temps effectif TE de la séquence de référence est lancé au deuxième temps t2 correspondant au premier choc 12a contre le volant de conduite 2. De même et toujours sur ce cinquième graphe 28, on remarque que l'intervalle de temps de référence TR correspond au moins à un temps compris entre le deuxième temps t2 et le quatrième temps t4. L'intervalle de temps effectif TE étant contenu dans l'intervalle de temps de référence TR, et l'amplitude effective AE des deux chocs 12, 12a, 12b étant au moins supérieure à l'amplitude de référence AR, au quatrième temps t4 l'unité de contrôle 8 commande la fonction 10 du véhicule automobile tel que cela est visible au sixième graphe 30.

Selon une un autre mode de réalisation de l'invention, à une troisième portion 300 et toujours selon la figure 3, on définit un cinquième temps t5 et un huitième temps t8 entre lesquels sont effectués le premier choc 12a et le deuxième choc 12b contre le volant de conduite 2, tel que visible sur le quatrième graphe 26. De manière plus précise, le premier choc 12a contre le volant de conduite 2 est effectué au cinquième temps t5, et celui-ci déclenche l'initiation de l'intervalle de temps de référence TR visible sur le cinquième graphe 28. Dans cet exemple, l'intervalle de temps de référence TR s'étend entre le cinquième temps t5 et se termine à un sixième temps t6. Or, le deuxième choc 12b contre le volant de conduite 2 est généré à un septième temps t7, en dehors de l'intervalle de temps de référence TR compris entre le cinquième temps t5 et le sixième temps t6.

On comprend alors de ce qui précède que le premier choc 12a et le deuxième choc 12b sont générés contre le volant de conduite 2 dans un intervalle de temps effectif TE supérieur à l'intervalle de temps de référence TR. Ainsi, l'unité de contrôle 8 reconnait que la séquence de chocs ne correspond pas à la séquence de référence et ne commande donc pas la fonction 10 du véhicule automobile, tel que cela est visible sur le sixième graphe 30.

On comprend de ce procédé de commande de la fonction du véhicule automobile qu'il permet de façon simple et fiable d'activer la fonction du véhicule automobile tout en assurant la sécurité du conducteur. On tire également avantage du procédé en ce qu'il permet une personnalisation des fonctions attribuées en fonction d'une gestuelle contre le volant de conduite par le conducteur sans nécessiter d'investissements techniques couteux.

## Revendications

1. Procédé de commande d'au moins une fonction (10) équipant un véhicule automobile (1), le véhicule automobile (1) comprenant au moins une direction assistée électrique (4) et un volant de conduite (2), la direction assistée électrique (4) comprenant au moins un capteur de couple (6) qui mesure un effort rotatif exercé sur la direction assistée électrique (4) généré par le volant de conduite (2), le procédé comprenant au moins une première étape au cours de laquelle le capteur de couple (6) détecte au moins une séquence vibratoire effective (16) générée par au moins deux chocs (12) contre le volant de conduite (2), une deuxième étape au cours de laquelle on analyse la séquence vibratoire effective (16) détectée par le capteur de couple (6) et une troisième étape de vérification de la séquence vibratoire effective (16) pour commander la fonction (10).

2. Procédé de commande selon la revendication précédente, **caractérisé en ce que** les au moins deux chocs (12, 12a, 12b) contre le volant de conduite (2) sont opérés dans un intervalle de temps effectif (TE) déterminé.

3. Procédé de commande selon l'une quelconque des revendications précédentes, dans lequel au cours de la deuxième étape, on compare la séquence vibratoire effective (16) détectée par le capteur de couple (6) avec une séquence de référence.

4. Procédé de commande selon la revendication précédente, **caractérisé en ce que** la deuxième étape d'analyse comprend une analyse de chaque choc de la séquence vibratoire dont l'amplitude doit être comprise entre deux valeurs de seuils d'amplitude.

5. Procédé de commande selon la revendication 3 ou 4 en combinaison avec la revendication 2, au cours duquel on compare un intervalle de temps effectif (TE) mesuré de la séquence vibratoire effective (16) détectée par le capteur de couple (6) avec un intervalle de temps de référence (TR) de la séquence de référence et on met en oeuvre la troisième étape au moins lorsque l'intervalle de temps effectif (TE) est sensiblement égal à l'intervalle de temps de référence (TR).

6. Procédé de commande selon l'une quelconque des revendications précédentes, au cours duquel au moins la troisième étape comprend une phase de validation de la vitesse du véhicule automobile, le véhicule automobile (1) se déplaçant à une vitesse effective (VE) inférieure ou égale à une vitesse seuil (VS) dudit véhicule automobile (1), la troisième étape n'étant pas validée lorsque le véhicule automobile (1) se déplace à la vitesse effective (VE) supérieure à la vitesse seuil (VS) dudit véhicule automobile (1).

7. Procédé de commande selon l'une quelconque des revendications précédentes, au cours duquel au moins la troisième étape est effectuée lorsque le capteur de couple (6) détecte une valeur effective de couple rotatif (CE) sur le volant de conduite (2) inférieure à une valeur seuil de couple rotatif (CS), la troisième étape n'étant pas effectuée lorsque la valeur effective de couple rotatif (CE) sur le volant de conduite (2) est supérieure à la valeur seuil de couple rotatif (CS).

8. Utilisation d'une direction assistée électrique (4) d'un véhicule automobile (1) comprenant au moins un capteur de couple (6) associé à un volant de conduite (2) pour commander une fonction (10) du véhicule automobile (1) autre que sa direction, au cours de laquelle on génère deux chocs (12) contre le volant de conduite (2), puis le capteur de couple (6) détecte au moins une séquence vibratoire effective (16) générée par les chocs (12) contre le volant de conduite (2), on analyse la séquence vibratoire effective (16) détectée par le capteur de couple (6) et on commande la fonction (10) concernée du véhicule automobile (1) suivant l'analyse de la séquence vibratoire effective (16) opérée préalablement.

9. Véhicule automobile (1) comprenant au moins un volant de conduite (2), une colonne de direction (5) et une direction assistée électrique (4) qui comprend au moins un capteur de couple (6) de la colonne de direction (5), une unité de contrôle (8) reliée au capteur de couple (6) et au moins un moteur électrique (11) de rotation de la colonne de direction (5), l'unité de contrôle (8) étant configurée pour générer une commande d'une fonction (10) du véhicule automobile (1) autre que sa direction au moyen du procédé de commande selon les revendications 1 à 7.

## Patentansprüche

1. Verfahren zur Steuerung wenigstens einer Funktion (10), mit der ein Kraftfahrzeug (1) ausgerüstet ist, wobei das Kraftfahrzeug (1) wenigstens eine elektrische Hilfskraftlenkung (4) und ein Lenkrad (2) umfasst, wobei die elektrische Hilfskraftlenkung (4) wenigstens einen Drehmomentsensor (6) umfasst, der eine auf die elektrische Hilfskraftlenkung (4) ausgeübte Drehkraft misst, die vom Lenkrad (2) erzeugt wird, wobei das Verfahren wenigstens einen ersten Schritt, bei dem der Drehmomentsensor (6) wenigstens eine effektive Vibrationssequenz (16) erfasst, die von wenigstens zwei Stößen (12) gegen das Lenkrad (2) erzeugt werden, einen zweiten Schritt, bei dem die effektive Vibrationssequenz (16), die vom Drehmomentsensor (6) erfasst wird, analysiert wird, und einen dritten Schritt des Überprüfens der effektiven Vibrationssequenz (16) umfasst, um die Funktion (10) zu steuern.

2. Steuerungsverfahren nach dem vorhergehenden Anspruch, **dadurch gekennzeichnet, dass** die wenigstens zwei Stöße (12, 12a, 12b) gegen das Lenkrad (2) in einem bestimmen tatsächlichen Zeitintervall (TE) durchgeführt werden.

3. Steuerungsverfahren nach einem der vorhergehenden Ansprüche, wobei im Verlauf des zweiten Schritts die effektive Vibrationssequenz (16), die vom Drehmomentsensor (6) erfasst wird, mit einer Referenzsequenz verglichen wird.

4. Steuerungsverfahren nach dem vorhergehenden Anspruch, **dadurch gekennzeichnet, dass** der zweite Schritt des Analysierens eine Analyse jedes Stoßes der Vibrationssequenz umfasst, dessen Amplitude zwischen zwei Amplitudenschwellenwerten liegen muss.

5. Steuerungsverfahren nach Anspruch 3 oder 4 in Kombination mit Anspruch 2, bei dem ein gemessenes tatsächliches Zeitintervall (TE) der effektiven Vibrationssequenz (16), die vom Drehmomentsensor (6) erfasst wird, mit einem Referenzzeitintervall (TR) der Referenzsequenz verglichen wird und der dritte Schritt wenigstens dann durchgeführt wird, wenn das tatsächliche Zeitintervall (TE) im Wesentlichen gleich dem Referenzzeitintervall (TR) ist.

6. Steuerungsverfahren nach einem der vorhergehenden Ansprüche, bei dem wenigstens der dritte Schritt eine Phase des Validierens der Geschwindigkeit des Kraftfahrzeugs umfasst, wobei sich das Kraftfahrzeug (1) mit einer tatsächlichen Geschwindigkeit (VE) fortbewegt, die kleiner als oder gleich einer Schwellengeschwindigkeit (VS) des Kraftfahrzeugs (1) ist, wobei der dritte Schritt nicht validiert wird, wenn sich das Kraftfahrzeug (1) mit der tatsächlichen Geschwindigkeit (VE) fortbewegt, die größer als die Schwellengeschwindigkeit (VS) des Kraftfahrzeugs (1) ist.

7. Steuerungsverfahren nach einem der vorhergehenden Ansprüche, bei dem wenigstens der dritte Schritt durchgeführt wird, wenn der Drehmomentsensor (6) einen tatsächlichen Wert eines Drehmoments (CE) am Lenkrad (2) erfasst, der kleiner als ein Drehmoment-Schwellenwert (CS) ist, wobei der dritte Schritt nicht durchgeführt wird, wenn der tatsächliche Drehmomentwert (CE) am Lenkrad (2) größer als der Drehmoment-Schwellenwert (CS) ist.

8. Verwendung einer elektrischen Hilfskraftlenkung (4) eines Kraftfahrzeugs (1), die wenigstens einen Drehmomentsensor (6) umfasst, der einem Lenkrad (2) zugeordnet ist, um eine andere Funktion (10) des Kraftfahrzeugs (1) als dessen Lenkung zu steuern, bei der zwei Stöße (12) gegen das Lenkrad (2) erzeugt werden, dann der Drehmomentsensor (6) wenigstens eine effektive Vibrationssequenz (16) erfasst, die von den Stößen (12) gegen das Lenkrad (2) erzeugt wird, die effektive Vibrationssequenz (16), die vom Drehmomentsensor (6) erfasst wird, analysiert wird, und die betroffene Funktion (10) des Kraftfahrzeugs (1) je nach der zuvor durchgeführten Analyse der effektiven Vibrationssequenz (16) gesteuert wird.

9. Kraftfahrzeug (1) umfassend wenigstens ein Lenkrad (2), eine Lenksäule (5) und eine elektrische Hilfskraftlenkung (4), die wenigstens einen Drehmomentsensor (6) der Lenksäule (5), eine Steuereinheit (8), die mit dem Drehmomentsensor (6) verbunden ist, und wenigstens einen Elektromotor (11) zur Drehung der Lenksäule (5) umfasst, wobei die Steuereinheit (8) dazu ausgebildet ist, eine Steuerung einer anderen Funktion (10) des Kraftfahrzeugs (1) als dessen Lenkung mittels des Steuerungsverfahrens nach den Ansprüchen 1 bis 7 zu erzeugen.

## Claims

1. Method for controlling at least one function (10) with which a motor vehicle (1) is equipped, the motor vehicle (1) comprising at least an electric power steering (4) and a steering wheel (2), the electric power steering (4) comprising at least a torque sensor (6) which measures a rotary force applied to the electric power steering (4) as generated by the steering wheel (2), the method comprising at least a first step during which the torque sensor (6) detects at least one effective vibratory sequence (16) generated by at least two taps (12) on the steering wheel (2), a second step during which the effective vibratory sequence (16) detected by the torque sensor (6) is analysed and a third step of verifying the effective vibratory sequence (16) in order to control the function (10).

2. Control method according to the preceding claim, **characterized in that** the at least two taps (12, 12a, 12b) on the steering wheel (2) are performed in a determined effective time interval (TE).

3. Control method according to any one of the preceding claims, wherein during the second step, the effective vibratory sequence (16) detected by the torque sensor (6) is compared against a reference sequence.

4. Control method according to the preceding claim, **characterized in that** the second, analysis, step comprises an analysis of each tap in the vibratory sequence of which the amplitude needs to be comprised between two amplitude thresholds.

5. Control method according to Claim 3 or 4 in combination with Claim 2, during which a measured effective time interval (TE) of the effective vibratory sequence (16) detected by the torque sensor (6) is compared against a reference time interval (TR) of the reference sequence and the third step is performed at least when the effective time interval (TE) is substantially equal to the reference time interval (TR).

6. Control method according to any one of the preceding claims, during which at least the third step comprises a phase of validating the speed of the motor vehicle, the motor vehicle (1) travelling at an effective speed (VE) less than or equal to a threshold speed (VS) of said motor vehicle (1), the third step not being validated when the motor vehicle (1) is travelling at the effective speed (VE) greater than the threshold speed (VS) of said motor vehicle (1).

7. Control method according to any one of the preceding claims, during which at least the third step is performed when the torque sensor (6) detects an effective rotary torque value (CE) for the torque on the steering wheel (2) less than a threshold rotary torque value (CS), the third step not being performed when the effective rotary torque value (CE) for torque on the steering wheel (2) is greater than the threshold rotary torque value (CS).

8. Use of an electric power steering (4) of a motor vehicle (1) comprising at least a torque sensor (6) associated with a steering wheel (2) to control a function (10) of the motor vehicle (1) other than the steering thereof, during the course of which use two taps (12) are generated on the steering wheel (2), then the torque sensor (6) detects at least an effective vibratory sequence (16) generated by the taps (12) on the steering wheel (2), the effective vibratory sequence (16) detected by the torque sensor (6) is analysed, and the relevant function (10) of the motor vehicle (1) is controlled according to the previously-performed analysis of the effective vibratory sequence (16).

9. Motor vehicle (1) comprising at least a steering wheel (2), a steering column (5) and an electric power steering (4) which comprises at least a torque sensor (6) sensing torque on the steering column (5), a control unit (8) connected to the torque sensor (6) and at least an electric motor (11) for turning the steering column (5), the control unit (8) being configured for generating a command for a function (10) of the motor vehicle (1) other than the steering thereof by means of the control method according to Claims 1 to 7.
